Europäisches Patentamt

European Patent Office

Office européen des brevets

(11) Publication number: **0 304 290**
**A1**

## EUROPEAN PATENT APPLICATION

(21) Application number: 88307632.5

(22) Date of filing: 17.08.88

(51) Int. Cl.⁴: **F 16 L 47/00**
**F 16 L 47/06, B 29 C 45/00**

(30) Priority: 19.08.87 GB 8719549
15.01.88 GB 8800900

(43) Date of publication of application:
22.02.89 Bulletin 89/08

(84) Designated Contracting States:
AT BE CH DE ES FR GB GR IT LI LU NL SE

(71) Applicant: AURORA PLASTICS LIMITED
62 Doughty Street
London WC1N 2LQ (GB)

(72) Inventor: Mason, David
The Maples West Street Thorne
Doncaster S.Yorkshire DN8 5QX (GB)

Smith, Russell
125, Harpenden Drive Hatfield
Doncaster S.Yorkshire DN7 4HW (GB)

(74) Representative: Thomas, Roger Tamlyn et al
D. Young & Co. 10 Staple Inn
London WC1V 7RD (GB)

(54) Moulding of plastics material.

(57) An article of moulded plastics material is described in which an abutment extending from a surface of the article is provided by a flap (10;17,18,19;26;52) moulded integrally with the article and connected thereto by a thinner portion (11;17;54) of plastics material to provide a hinge, the flap being folded back after moulding so that it lies along the surface. Preferably the article is a female pipe fitting, the abutment providing the axially outward wall of a seal retaining groove or providing a retaining ridge for an annular snap-fitted member which provides the groove wall.

EP 0 304 290 A1

Description

## MOULDING OF PLASTICS MATERIALS

This invention relates to the moulding of plastics materials, particularly thermoplastics materials such as polypropylene, ABS and PVC which are capable of injection or blow moulding and which have some flexibility.

The invention arose from problems encountered in injection-moulding polypropylene pipe fittings, such as fittings for waste, soil and drainpipes, which have a circular female connecting portion with a radially inwardly facing groove for housing an O-ring seal. Such fittings are moulded around a core member within an outer mould which can be opened by splitting in two along a diametrical plane, the core member or members being withdrawn axially after such separation. This means that the axially outward wall of the groove has to be of limited height and/or chamfered to permit core member withdrawal even in the case of relatively flexible plastics material such as polypropylene. Alternatively the core member may be inwardly collapsible but this adds considerably to tooling costs. A popular way of overcoming this problem is to use an additional annular member to provide the axially outer wall of the groove. The profile of this annular member has a rectangular axially facing channel which fits over the end of the pipe fitting, the radially inner wall of the channel providing the axially outward wall of the O-ring groove and the radially outer wall of the channel snapping behind a ridge on the outside of the pipe fitting. In another arrangement, the additional annular member has a radially outwardly facing channel and fits wholly within the pipe fitting. It is retained by a small radially inwardly facing ridge in the fitting which snaps into the channel. However, the axially inward side of this ridge has to be chamfered and/or of low height to permit core tool removal as explained above. This leads to a danger of the additional member becoming detached from the fitting in use.

There is thus a need for an improved method of forming a radially inwardly facing groove in a cylindrical plastics member during moulding. Similar problems can also arise when the plastics member is not cylindrical but radial separation of two outer mould members is not possible because of the need to provide undercuts. For example a female rainwater gutter union moulded e.g. from polypropylene may be of semi-circular cross-section with an inwardly facing groove for a compression seal but have retaining overhangs at the top to hold the corresponding male length of guttering against the compression seal.

According to the invention, we provide an article of moulded plastics material in which an abutment extending from a surface of the article is provided by a flap moulded integrally with the article and connected thereto by a thinner portion of plastics material to provide a hinge, the flap being folded back after moulding so that it lies along the surface. Usually the surface will be concavely curved, e.g. cylindrical or hemi-cylindrical, so that the flap is automatically retained in its new position (passing an over-centre point during the folding operation).

It will be appreciated that, with a flexible plastics material, a thin flap can be folded back without any substantial buckling. However, with a thicker flap or less flexible material it may be desirable to include interruptions along the length of the flap to take account of the smaller radius after folding. For example the outside of the flap could be moulded to include V-shaped notches at spaced intervals or the flap could be divided up into teeth by rectangular notches. In the latter case the abutment provided after folding would not be continuous but would be provided by a series of radially inwardly extending teeth.

A relatively thin flap can still provide an abutment of limited height on the surface of the article and this abutment can in turn provide a ridge over which an additional annular (or arcuate) member can be snapped as described above. However as there is no tool withdrawal problem, the abutment can be at right angles to the surface so that the additional annular member is securely locked in position.

Preferred embodiments of the invention will now be described with reference to the accompanying drawings, in which:-

Fig. 1 is a plan view of a pipe union according to the invention;

Fig. 2 is a horizontal diametrical section through the pipe union of Fig. 1 showing the position of the flap before folding in the top half of the figure;

Fig. 3 is an enlargement of the right-hand end of Fig. 2 omitting the O-ring seal;

Fig. 4 is an end view of Fig. 3;

Figs. 5A and 5B are respectively views of a second embodiment of the invention showing in Fig. 5A the part corresponding to the upper part of Fig. 3 and in Fig. 5B a similar view showing the folded position of the flap;

Figs. 6A and 6 B are similar views to Figs. 5A and 5B of a third embodiment;

Figs. 7A and 7B are similar views to Figs. 5A and 5B of a fourth embodiment;

Figs. 8A, 8B are similar views to Figs. 5A and 5B of a fifth embodiment and Fig. 8C is an end view of the flap in the Fig. 8A position;

Figs. 9A and 9B are similar views to Figs. 5A and 5B of a sixth embodiment;

Figs. 10A and 10B are similar views to Figs. 5A and 5B of a seventh embodiment;

Figs. 11A and 11B are similar views to Figs. 5A and 5B of an eighth embodiment;

Figs. 12A and 12B are similar views to Figs. 5A and 5B of a ninth embodiment;

Figs. 13A, 13B, 13C and 13D are similar views to Figs. 5A and 5B of a tenth embodiment, Fig. 13A being a view of the flap as moulded, Fig. 13B being a view of the folded flap with an annular member snapped into position therein and Fig. 13C and Fig. 13D being similar to Fig. 13B but showing different forms of annular member;

Figs. 14A and 14B are similar views to Figs. 13A and 13B of an eleventh embodiment;

Fig. 15 is an end view of a gutter locking clip for a rainwater gutter fitting, the left hand side being as moulded and the right hand side showing a turned back flap;

Figs. 16A and 16B are end views of, and Figs. 17A and 17B are vertical sections through, a rainwater gutter fitting moulding, Figs. 16A and 17A being as moulded and Figs. 16B and 17B showing the flap folded back to form a groove for receiving a seal;

Figs. 18A and 18B are views similar to Figs. 17A and 17B but illustrating a modified flap profile;

Fig. 19 is an end view of a pipe fitting according to the invention (as moulded);

Fig. 20 is a cross-section of the fitting of Fig. 19 on line A-A;

Fig. 21 is a side view of the fitting of Fig. 19 in the direction of arrow B;

Fig. 22 shows a magnified detail of Fig. 20;

Fig. 23 shows a view similar to Fig. 20 with the flaps folded back and an annular clip snapped into position; and

Fig. 24 is a side view of the annular clip shown in Fig. 23.

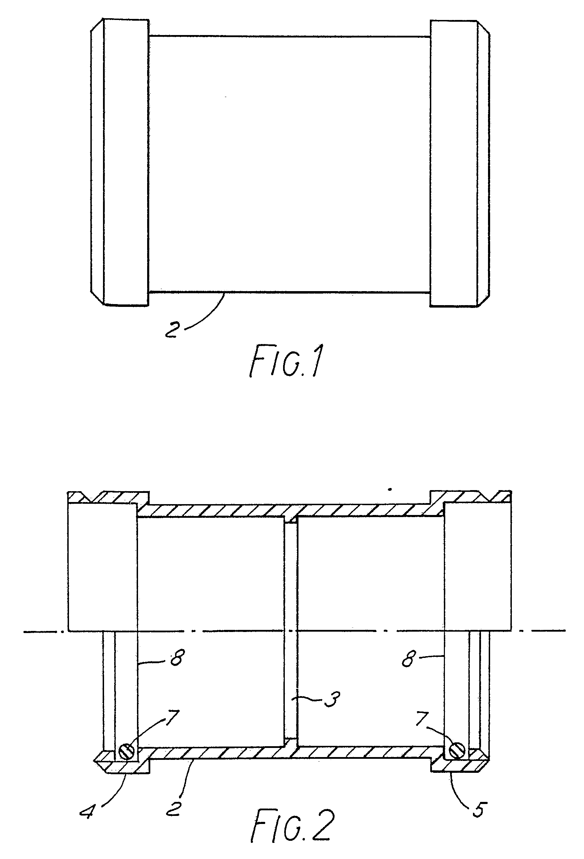

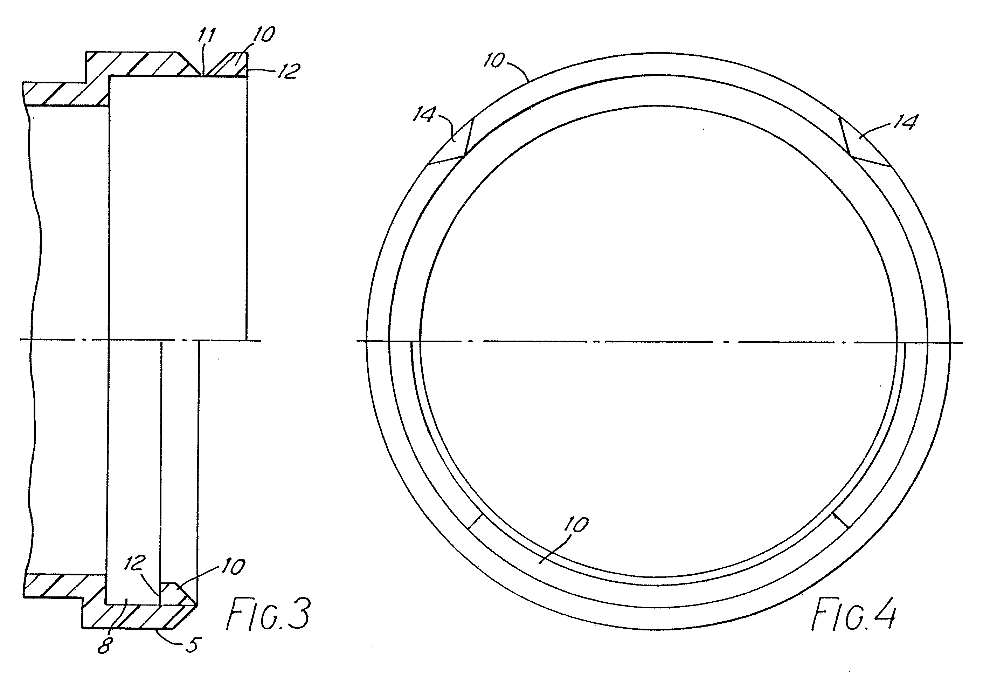

As shown in Figs. 1-4 a polypropylene pipe union of the push-on type comprises a main body 2, an abutment ridge 3 and a pair of enlarged end portions 4 and 5 respectively, each containing an O-ring seal of conventional type 7 and a retaining groove 8 therefor. Referring to the top part of Figs. 3 and 4, the enlarged portion 5 is moulded with an integral flap 10 connected to the remainder of the enlarged portion 5 by a thin portion 11 such that the flap 10 can be pivoted through 180° to the position shown in a lower half of Figs. 3 or 4 without breaking. The end wall 12 of the flap 10 thus forms the axially outward side wall of the groove 8. It is envisaged that the flap 10 will be folded by hand. Because the flap 10 is relatively thick and there is a substantial radial distance between the top of the flap 10 in the unfolded position and in the folded position, provision has to be made for its reduced circumference and this is effected by notches 14 which are formed during moulding. In some cases, the notches may not be sufficient to accommodate the whole of the change in circumference so the polypropylene is still compressed when the flap is in its fully folded position.

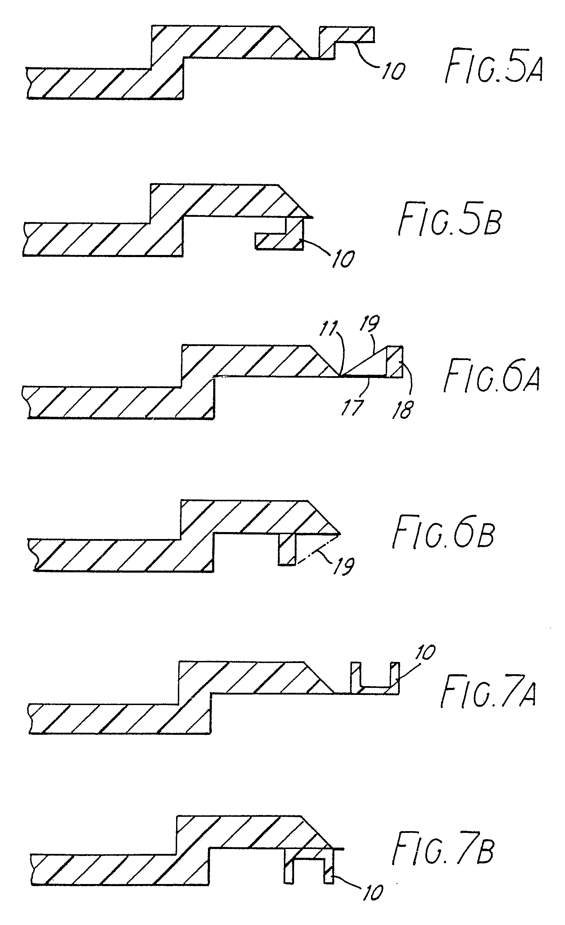

In the second embodiment shown in Figs. 5A and 5B, the flap is L-shaped.

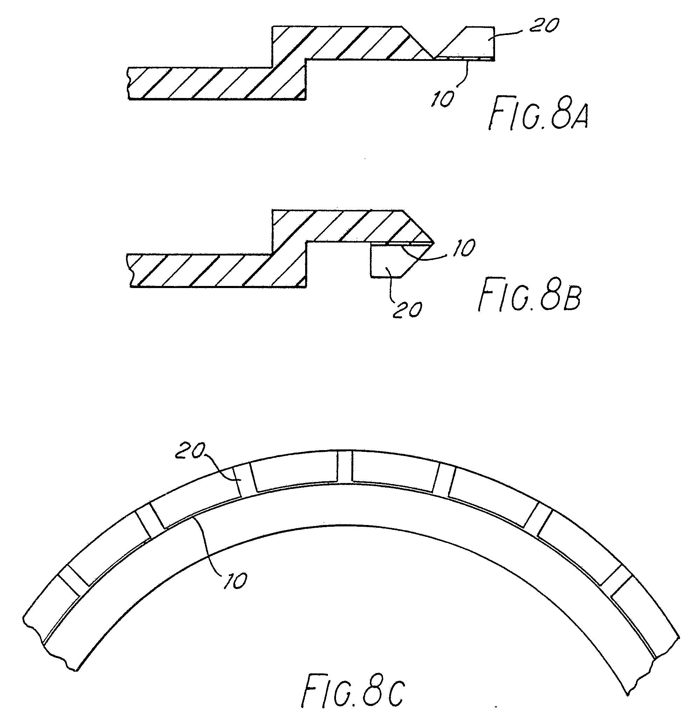

In the third embodiment shown in Figs. 6A and 6B, the flap has a relatively thin portion 17 extending outward from the hinge point (thin portion 11) and a relatively thick radial portion 18. The portions 17 and 18 may desirably be interconnected by triangular stiffening webs 19 at intervals.

In the fourth embodiment shown in Figs. 7A and 7B, the flap 10 is of channel section.

In the fifth embodiment shown in Figs. 8A, 8B and 8C, there is a thin flap 10 which has spaced upstanding webs 20, the spacing being sufficiently close to maintain the O-ring seal in position.

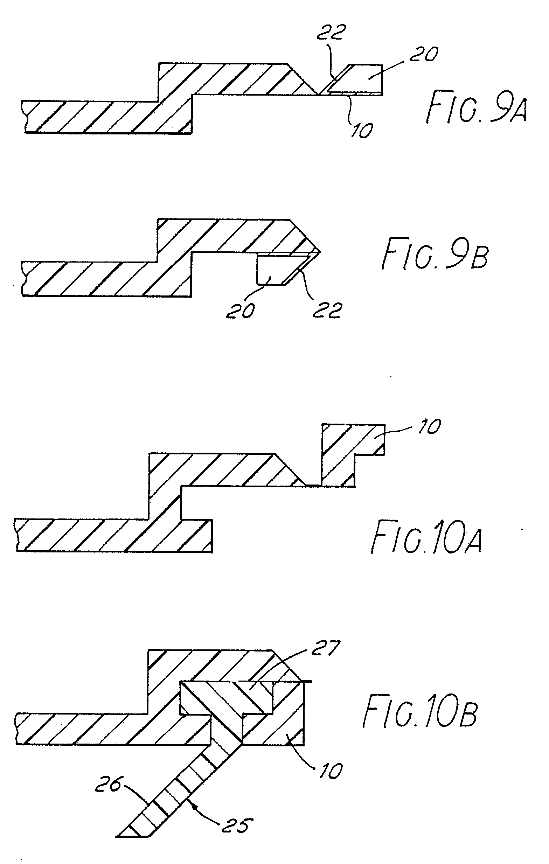

The sixth embodiment shown in Figs. 9A and 9B is similar to the embodiment shown in Figs. 8A, 8B and 8C except that a continuous annular web 22 joins the webs 20. This provides a tidier end and obscures the O-ring seal. Because of the undercut beneath the web 22, an axially retractable moulding tool has to be used for its formation.

In the seventh embodiment shown in Figs. 10A and 10B, an L-shaped flap is used which is similar to the flap shown in Figs. 5A and 5B but here the flap 10 is used to retain an annular flap seal (e.g. of the type used to connect pipes to toilet bowls). As shown Fig. 10B such seals 25 have an inclined flap portion 26 and a rectangular rim 27 by which they are held.

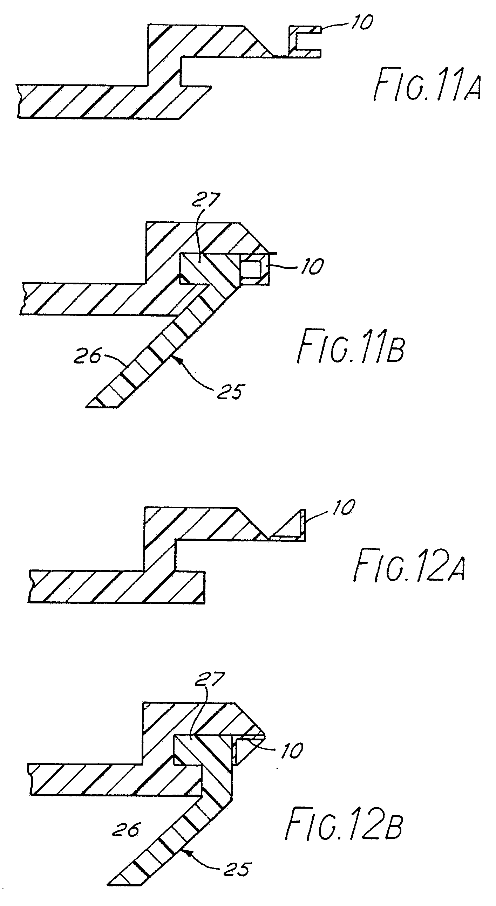

The eighth embodiment shown in Figs. 11A and 11B show a variation of the arrangement of Figs. 10A and 10B in which the flap is channel shaped and the seal 25 has a somewhat different profile.

Again, in the ninth embodiment shown in Figs. 12A and 12B, a slightly different arrangement of flap and seal is shown.

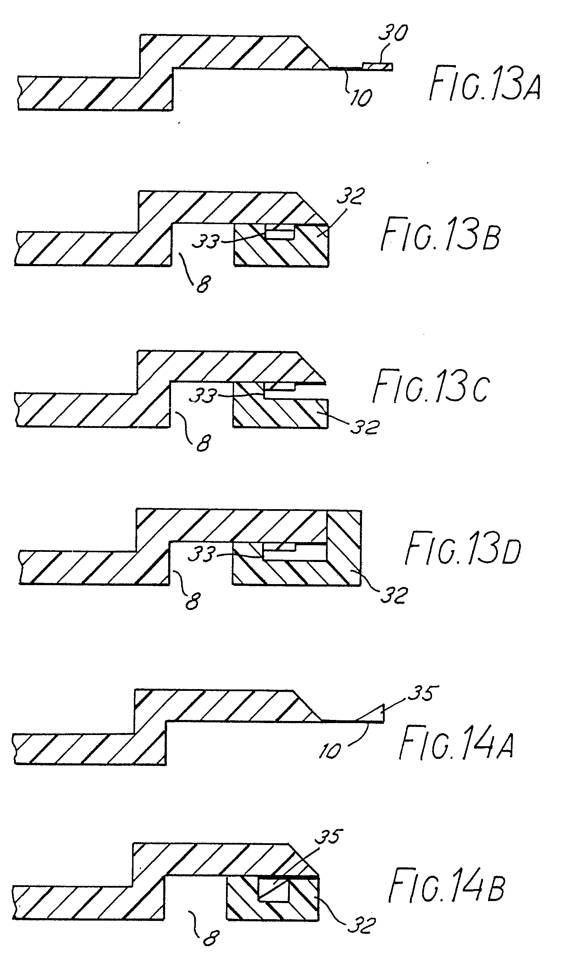

In the tenth embodiment shown in Figs. 13A, 13B, 13C and 13D, a relatively thin flap 10 has a low rectangular ridge 30 on its outer side. When folded back as shown in Figs. 13B, 13C and 13D the ridge 30 is used to retain an additional annular polypropylene member 32 which has a channel 33 in its outer face providing an end wall 33 which snaps behind the ridge 30 when the member 32 is forced into the end of the pipe union containing the folded back flap 10. The left-hand end of the member 32 and the right-hand end of the ridge 30 (in the folded back position) are desirably chamfered to facilitate insertion. The annular member 32 thus provides the axially outer wall of the groove 8.

In the eleventh embodiment shown in Figs. 14A and 14B, the annular member 32 is retained by spaced triangular webs 35 on the flap 10 instead of by a ridge 30. Because the webs 35 are spaced, they can be made of substantial height without interfering with folding back of the flaps 10.

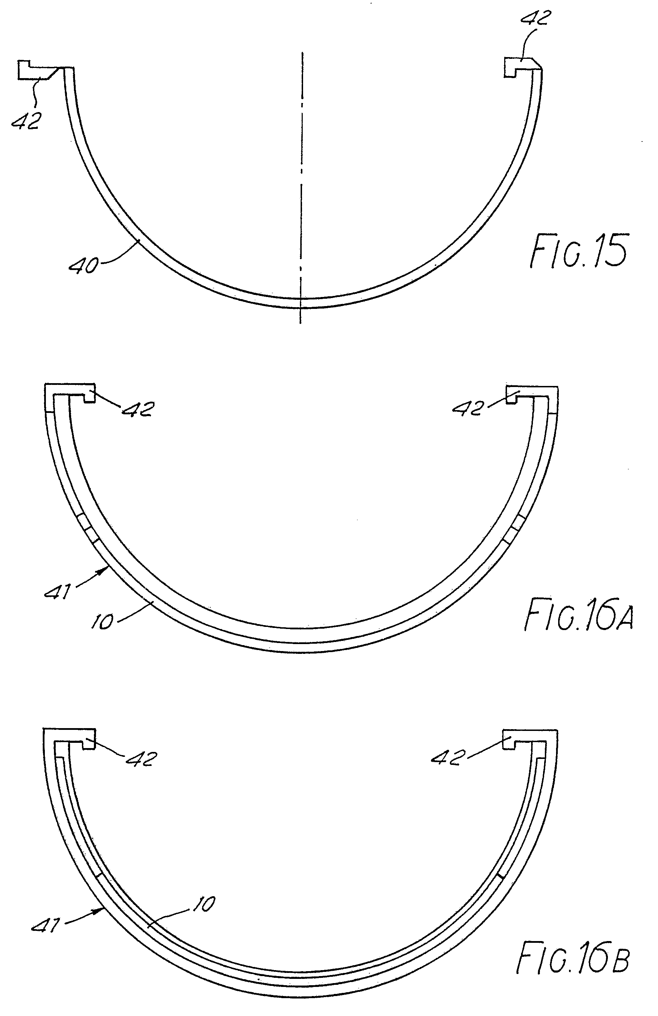

Fig. 15 shows a gutter locking clip for a rainwater gutter fitting, the left hand side being as moulded and the right hand side showing a turned back flap. The clip 40 is designed to lodge in an external groove of a gutter fitting (as described for example in UK Patent Specification No. 2081330) in such a way that lips 42 overhand the interior of the union. As will be seen from the left of Fig. 15 the lips 42 are moulded as integral flaps which are then folded to their final position as shown on the right of Fig. 15 where they are appropriately secured e.g. by adhesive. It will be seen from Fig. 15 that the moulding tools will be separated vertically. This permits the cross-sectional profile of the clip to have a wide variety of shapes; for example it may be grooved to receive a seal which projects through a slot into the interior of the gutter fitting.

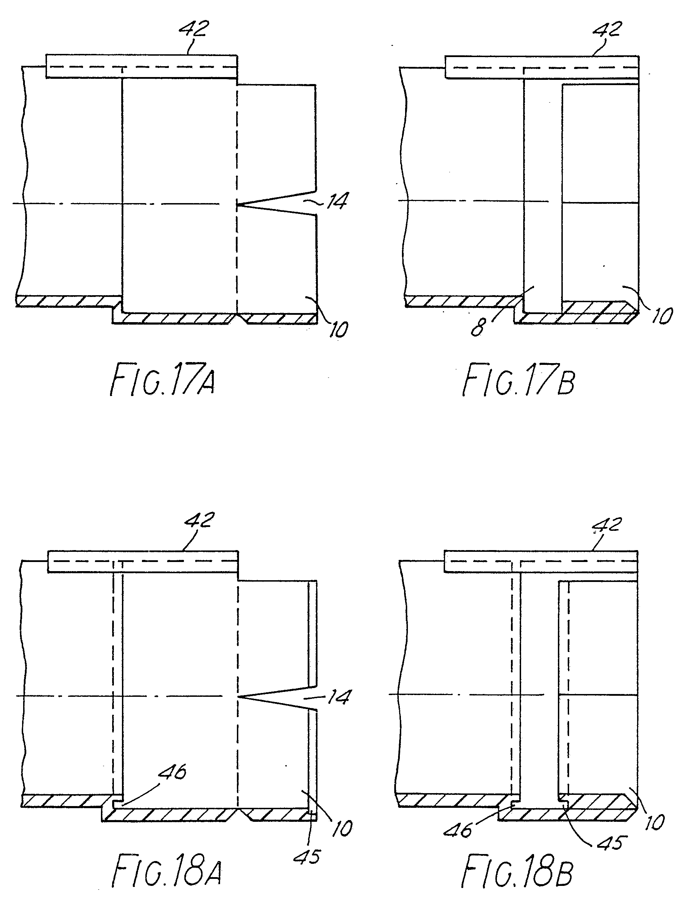

Figs. 16 and 17 show a rainwater gutter fitting 41 in which the lips 42 are moulded as integral rigidly connected parts so that tool separation is in an axial direction (in and out of the paper in Fig. 16). A flap 10 is moulded and folded in the same way as previously described with reference to Figs. 1 and 4 except, of course, that the flap 10 is in this case disposed along a semicircle instead of around a full circle.

In the Fig. 18 modification, the outer wall of the flap 10 and the inner wall of the groove 8 are moulded with respective full length recesses 45 and 46 such that when the flap 10 is folded back a T-shaped groove profile is obtained which is suitable for locking a correspondingly shaped seal in position.

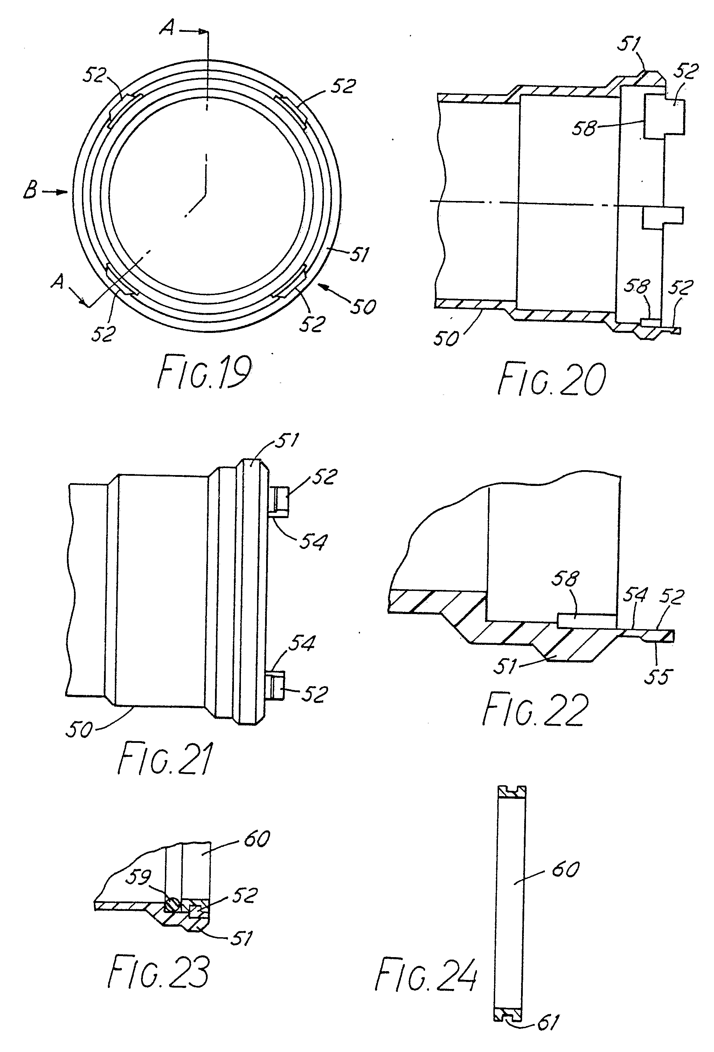

Referring now to Figs. 19-24, a pipe or pipe fitting 50 of plastics material such as polypropylene is moulded with an end portion 51 of enlarged diameter. Integrally moulded with the end portion 51 are four longitudinally extending flaps or lugs 52. These flaps 52 include a thinner portion 54 connecting them to the main part of the moulding and a thicker end portion 55, the outer surfaces of the two portions 54, 55 being interconnected by a chamfer 56 (see Fig. 22). Longitudinally inward of each of the flaps 52 the radially inner surface of the end portion 51 has a recess 58 which is slightly wider than the flap 52. The radially inner surface of the flap 52 is flush with the bottom of the recess 58 to permit folding back as shown in Fig. 23. The bottom of the recess 58 and the radially inward face of the flap 52 are both slightly concave but the material is sufficiently flexible to accommodate the two concave surfaces which face each other after folding back of the flap 52. An O-ring seal 59 and an annular polypropylene clip 60 with a peripheral groove 61 are sequentially then pushed into the end of the fitting, the flap portion 55 snapping into the groove 61 in the clip 60. Alternatively, the O-ring seal 59 may be sufficiently flexible for insertion and removal after the clip 60 is in position.

In all the illustrated embodiments of the invention, the flap 10 can be secured in its final position using adhesive.

## Claims

1. An article of moulded plastics material in which an abutment extending from a surface of the article is provided by a flap moulded integrally with the article and connected thereto by a thinner portion of plastics material to provide a hinge, the flap being folded back after moulding so that it lies along the surface.

2. An article according to claim 1, wherein the flap is adhered to the surface.

3. An article according to claim 1 or 2, wherein the surface is concavely curved along the fold line.

4. An article according to claim 3, wherein the flap is interrupted to compensate for its smaller radius after folding.

5. An article according to claim 4, wherein the flap comprises teeth or is notched.

6. An article according to claim 3, 4 or 5, wherein the surface is cylindrical.

7. An article according to claim 6, which is a female pipe fitting, the abutment providing the axially outward wall of a seal retaining groove.

8. An article according to claim 7, wherein the axially inward face of the folded flap has an undercut for receiving a similarly profiled seal.

9. An article according to claim 6, which is a female pipe fitting, the folded flap providing a retaining ridge for an annular snap-fitted member which provides the axially outward wall of a seal retaining groove.

10. An article according to claim 3, 4 or 5, wherein the surface is hemi-cylindrical.

11. An article according to claim 3, 4, 5 or 10, wherein the article is a female rainwater gutter fitting, the abutment provides the axially outward wall of a seal retaining groove, and lips are provided to hold the gutter against the seal.

12. An article according to claim 3, 4 or 5, which is a female rainwater gutter fitting which has a seal-retaining groove with an integral axially outward wall, the abutments providing lips for holding the gutter against the seal.

13. An article according to claim 1 or 2, wherein the final shape of the article is such that the direction of mould part separation does not permit the abutment to be integrally moulded.

*FIG.1*

*FIG.2*

FIG.3

FIG.4

EP 0 304 290 A1

FIG.5A

FIG.5B

FIG.6A

FIG.6B

FIG.7A

FIG.7B

FIG.8A

FIG.8B

FIG.8C

22

20

FIG. 9A

10

FIG. 9B

20    22

10

FIG. 10A

27

FIG. 10B

10

26

25

*FIG.11A*

*FIG.11B*

*FIG.12A*

*FIG.12B*

FIG.13A

FIG.13B

FIG.13C

FIG.13D

FIG.14A

FIG.14B

FIG.15

FIG.16A

FIG.16B

FIG.17A

FIG.17B

FIG.18A

FIG.18B

FIG.19

FIG.20

FIG.21

FIG.22

FIG.23

FIG.24

## DOCUMENTS CONSIDERED TO BE RELEVANT

EP 88307632.5

| Category | Citation of document with indication, where appropriate, of relevant passages | Relevant to claim | CLASSIFICATION OF THE APPLICATION (Int. Cl.4) |
|---|---|---|---|
| X | WO – A1 – 81/00 077 (DOWNEY PLASTICS LTD.) <br> * Totality * <br> –– | 1-6,13 | F 16 L 47/00 <br> F 16 L 47/06 <br> B 29 C 45/00 |
| X | EP – A1 – 0 008 935 (MARLEY TILE AG) <br> * Totality * <br> –– | 1-7,11 | |
| A | US – A – 4 428 899 (VAN MANEN) <br> –––– | | |

TECHNICAL FIELDS
SEARCHED (Int. Cl.4)

F 16 L 13/00
F 16 L 47/00
B 29 C 45/00
B 29 D 23/00

The present search report has been drawn up for all claims

| Place of search | Date of completion of the search | Examiner |
|---|---|---|
| VIENNA | 16-11-1988 | SCHUGANICH |